**Europäisches Patentamt**

**European Patent Office**

**Office européen des brevets**

(11) Veröffentlichungsnummer: **0 022 502**
A1

## (12) EUROPÄISCHE PATENTANMELDUNG

(21) Anmeldenummer: 80103676.5

(22) Anmeldetag: 28.06.80

(51) Int. Cl.³: **B 32 B 15/08**, B 32 B 15/20

(30) Priorität: 04.07.79 DE 2926939

(43) Veröffentlichungstag der Anmeldung: 21.01.81
Patentblatt 81/3

(84) Benannte Vertragsstaaten: **AT BE CH DE FR GB IT LI NL SE**

(71) Anmelder: **Herberts Gesellschaft mit beschränkter Haftung, Christbusch 25, D-5600 Wuppertal 2 (DE)**

(72) Erfinder: **Heinrich, Siegfried, Augustastrasse 84, D-5600 Wuppertal 1 (DE)**
Erfinder: **Kortwig, Bernd, Mittelstrasse 14b, D-4322 Sprockhövel (DE)**
Erfinder: **Lilienbeck, Klemens, Hordenbachstrasse 50, D-5600 Wuppertal 21 (DE)**
Erfinder: **Ottmann, Gerhard F., Dr. Dipl.-Chem., Westfalenweg 308, D-5600 Wuppertal 1 (DE)**
Erfinder: **Stolzenbach, Heinrich, Dr. Dipl.-Chem., Kottsiepen 83, D-5600 Wuppertal 21 (DE)**
Erfinder: **Wramba, Herbert, Obere Lichtenplatzerstrasse 269a, D-5600 Wuppertal 2 (DE)**

(74) Vertreter: **Türk, Dietmar, Dr. rer. nat. et al, Redies, Redies, Türk & Gille, Patentanwälte Brucknerstrasse 20, D-4000 Düsseldorf 13 (DE)**

(54) Laminat, Verfahren zu seiner Herstellung und Verwendung von Silanen hierfür.

(57) Laminat mit verbesserter Produkt- und Sterilisationsbeständigkeit aus Polyesterfolie, einer Aluminiumfolie als Mittelschicht und einer Folie aus Polyäthylen, Polypropylen und/oder einem Mischpolymerisat aus Äthylen und Propylen und Verfahren zur Herstellung eines solchen Laminats durch Verbinden von Folien durch maschinelles Beschichten mit Ein- oder Zweikomponenten-Kaschierklebern aus einem Gemisch von

a) hydroxyfunktionellen Polyestern, Polyäthern oder Mischpolyäther-estern, Polyolen und gegebenenfalls Polyaminen und/oder Aminoalkoholen und/oder hydroxyfunktionellen Polyurethanen und

b) Polyisocyanaten,

oder aus freie Isocyanatgruppen tragenden Reaktionsprodukten aus den Komponenten a) und b), die ein Silan mit mindestens einer Epoxidgruppe enthalten.

EP 0 022 502 A1

Laminat, Verfahren zu seiner Herstellung und Verwendung
von Silanen hierfür

Die vorliegende Erfindung betrifft ein Laminat aus einer
Polyesterfolie, einer Aluminiumfolie als Mittelschicht
und einer Folie aus Polyäthylen, Polypropylen und/oder
einem Mischpolymerisat aus Polyäthylen und Polypropylen,
wobei die Folien mit Polyurethan-Kaschierklebern verklebt
sind. Weiterhin betrifft die Erfindung ein Verfahren zur
Herstellung eines solchen Laminats und die Verwendung
von Silanen hierfür als Bestandteil der Kaschierkleber.

Es ist bekannt, Folien aus den verschiedenartigsten Materialien wie Cellulosederivaten, Polyolefinen, Polyestern,
Polyamiden, Metallen ,wie Zinn oder Aluminium, die auch einer
Oberflächenbehandlung durch Flämmen oder Dunkelentladung
unterworfen sein können oder die zur Verbesserung der
physikalischen Eigenschaften mit Kunststoffmassen, z.B.
Polyvinylidenchlorid,beschichtet sein können, mittels Klebstoffsystemen zu verbinden, um die Eigenschaften verschiedener Folien in einem Komplex zu vereinigen. Ziel einer solchen
Maßnahme kann es sein, besonders dekorative Effekte zu erreichen, oder technische Effekte wie Schutz eines Aufdrucks,
Erzeugung kochfester Komplexe, Unterbindung der Dampfdiffusion, Heißsiegelbarkeit, zuverlässige Vermeidung der Porigkeit, Beständigkeit gegen aggressive Güter zu bewirken.

Unter den für derartige Kaschierungen eingesetzten Klebstoffsystemen werden besonders die über die Reaktion von Isocyanatgruppen mit hydroxylfunktionellen Verbindungen vernetzenden
Bindemittelsysteme geschätzt.

Nach dem Stand der Technik bestehen diese Klebstoffsysteme in der Regel aus einem Gemisch von

a) hydroxifunktionellen Polyestern, Polyäthern oder Mischpolyäthern-estern, Polyolen und gegebenenfalls Polyaminen und/oder Aminoalkoholen, und/oder hydroxyfunktionellen Polyurethanen, und

b) Polyisocyanaten,

oder aus freie Isocyanatgruppen tragenden Reaktionsprodukten aus den Komponenten a) und b).

Die Gemische aus den Komponenten a) und b) werden als Zweikomponenten-Kleber, und die Reaktionsprodukte aus den Komponenten a) und b), die jedoch noch freie Isocyanatgruppen aufweisen müssen, als Einkomponenten-Kleber bezeichnet. Beide Arten von Kleber können als lösungsmittelhaltige oder als lösungsmittelfreie Kleber eingesetzt werden. Weiterhin besteht die Möglichkeit, Reaktionsprodukte aus den Komponenten a) und b) mit unter a) genannten Materialien als Zweikomponenten-Kleber zu verwenden.

Besonders vorteilhafte lösungsmittelfreie Einkomponenten-Kleber sind freie -NCO-Gruppen enthaltende Umsetzungsprodukte von hydroxyfunktionellen Äthern und/oder Polyestern und gegebenenfalls Polyaminen, Aminoalkoholen oder Polyolen mit Polyisocyanaten, welche mit H-aciden Verbindungen zu reagieren vermögen, die ein mittleres Molekulargewicht von 5oo bis 1o ooo und einen Gehalt an -NCO-Gruppen von 1 bis 1o Gew.-% aufweisen. Dabei ist es besonders bevorzugt, daß die Viskosität bei den Auftragsbedingungen höchstens 6o Pas unter Auftragsbedingungen beträgt und die Temperatur der Auftragsmasse höchstens bei 140°C und auch an der wegen der geringen Wärmeleitfähigkeit der Masse besonders stark auskühlenden Oberflächenschicht nicht so weit unter der Temperatur der umgebenden Luft liegt, daß solche Mengen Luftfeuchtigkeit in die in der Wanne der Auftragsmaschine befindliche Auftragsmasse kondensieren, daß das potlife der Auftragsmasse in der Wanne unter den für die Durchführung des Auftragsverfahrens erforderlichen Wert sinkt.

Es ist weiterhin bevorzugt, daß zur Herstellung der vorstehend beschriebenen Umsetzungsprodukte Polyester und/oder Polyäther mit einem Molekulargewicht von 3oo bis 4 ooo, bevorzugt 4oo bis 2 ooo, verwendet werden. Außerdem ist es bevorzugt, daß diese Umsetzungsprodukte Polyole in einer Menge von nicht über etwa 3o Gew.-%, vorzugsweise nicht über 2o Gew.-% einpolymerisiert enthalten. Es ist außerdem bevorzugt, daß die zur Herstellung der Umsetzungsprodukte verwendeten Polyisocyanate ein Molekulargewicht im Bereich von 1oo bis 1 5oo, vorzugsweise 15o bis 5oo aufweisen. Derartige lösungsmittelfreie Einkomponenten-Kleber und das Verfahren zur Herstellung von Laminaten unter deren Verwendung ist im einzelnen in der DE-OS 25 49 227 beschrieben.

Derartige Klebstoffsysteme ergeben bei der Verwendung zum Kaschieren von Folien Kaschierfolien mit den Praxisanforderungen vollauf genügenden Haftfestigkeiten. Jedoch weisen die für einen Kaschierkleber nach dem Stand der Technik hergestellten Kaschierfolien häufig den Nachteil einer mangelnden Produktbeständigkeit auf, d.h. daß sie im Kontakt mit dem vorgesehenen Verpackungsgut nach längerer Zeit ihr Aussehen verändern bzw. sogar eine Ablösung der Kaschierfolien voneinander aufweisen.

Ein weiterer Nachteil von nach dem Stand der Technik hergestellten Kaschierklebern ist häufig, daß Verbundfolien, die Aluminium als Mittelschicht beinhalten, nicht sterilisations-

4.

0022502

beständig sind, insbesondere, wenn in Wasser oder Wasserdampf sterilisiert wird, oder aber, wenn feuchte Füllgüter längere Zeit bei höheren Temperaturen in derartigen Verpackungen gelagert werden. Auch in den Fällen tritt ein Ablösen der Folien voneinander auf.

Es bestand daher die Aufgabe, ein Laminat und ein Verfahren zu dessen Herstellung zu finden, das eine verbesserte Produkt- und Sterilisationsbeständigkeit besitzt.

Gegenstand der vorliegenden Erfindung ist demgemäß ein Laminat aus einer Polyesterfolie, einer Aluminiumfolie als Mittelschicht, und einer Folie aus Polyäthylen, Polypropylen und/oder einem Mischpolymerisat aus Äthylen und Propylen, wobei die Folien mit Polyurethan-Kaschierklebern verklebt sind, und das gemäß der Erfindung dadurch gekennzeichnet ist, daß die Kaschierkleber ein Silan mit mindestens einer Epoxygruppe enthalten.

Gegenstand der vorliegenden Erfindung ist weiterhin ein Verfahren zur Herstellung von einem Laminat aus einer Polyesterfolie, einer Aluminiumfolie als Mittelschicht und einer Folie aus Polyäthylen, Polypropylen und/oder einem Mischpolymerisat aus Äthylen und Propylen durch Verbinden von Folien durch maschinelles Beschichten mit einer Geschwindigkeit von vorzugsweise mehr als 50 m/min von einer oder von beiden der zu verbindenden Folienseiten mit lösungsmittelhaltigen oder lösungsmittelfreien Ein- oder Zweikomponenten-Kaschierklebern aus einem Gemisch von

a) hydroxifunktionellen Polyestern, Polyäthern oder Mischpolyäthern-estern, Polyolen und gegebenenfalls Polyaminen und/oder Aminoalkoholen, und/oder hydroxyfunktionellen Polyurethanen, und

b) Polyisocyanaten,

oder aus freie Isocyanatgruppen tragenden Reaktionsprodukten aus den Komponenten a) und b)

**d a d u r c h   g e k e n n z e i c h -**
**n e t,** daß die Kaschierkleber ein Silan mit mindestens einer Epoxigruppe enthalten.

Der gemäß der Erfindung eingesetzte Polyurethan-Kaschierkleber ist bevorzugt ein Einkomponenten-Kleber, insbesondere ein lösungsmittelfreier Einkomponentenkleber, wie er im Stand der Technik bekannt ist, wobei besonders geeignet die Kleber sind, die oben unter Hinweis auf die DE-OS 25 49 227 erwähnt wurden.

Silane, die als Haftvermittler geeignet sind, werden in großer Zahl von vielen Firmen angeboten und gehören zum Stand der Technik. Sie enthalten am Siliciumatom eine organofunktionelle Gruppe und hydrolysierbare Gruppen. Die gemäß der Erfindung verwendeten Silane enthalten als organofunktionelle Gruppe solche Gruppen, die mindestens eine Epoxigruppe enthalten. Beispiele hierfür sind aliphatische Ketten mit einer Epoxigruppe oder cycloaliphatische Gruppen mit einer Epoxigruppe, z.B. die 3.4-Epoxi-cyclo-hexyl-Gruppe. Diese Gruppen **können direkt oder über eine aliphatische Gruppe an das Siliciumatom gebunden sein, oder aber** auch über aliphatische Gruppen, die durch ein Sauerstoffatom und eine weitere aliphatische Gruppe an das Siliciumatom gebunden sind. Unter aliphatischen Gruppen werden im Sinne der vorliegenden Erfindung vorzugsweise niedere aliphatische Gruppen mit 1 bis 4, besonders bevorzugt 1 oder 2 Kohlenstoffatomen verstanden. Die hydrolysierbaren Gruppen sind in der Regel solche der Formel -OR, wobei R für aliphatische Gruppen mit zweckmäßig 1 bis 4 Kohlenstoffatomen steht, die Alkyl- oder Alkoxialkyl-Gruppen sein können. Die Silane können als hydrolysierbare Gruppen aber auch Alkancarbonsäure-, insbesondere Acetylgruppen aufweisen. Die

Art der hydrolysierbaren Gruppen ist im Sinne der vorliegenden Erfindung nicht besonders kritisch. Zu vermeiden sind natürlich solche Gruppen, die physiologisch bedenklich sind, wenn die hergestellten Verbundfolien zum Verpacken von Lebensmitteln, Arzneimitteln und dergleichen eingesetzt werden sollen.

Die Silane können den Einkomponenten-Klebern und einer oder beiden Komponenten der Zweikomponenten-Kleber zugesetzt werden.

Als erfindungsgemäß zu verwendende Silane kommen insbesondere in Betracht:
ß (3.4-Epoxi-cyclo-hexyl)äthyl-trimethoxi-silan und
$\gamma$-Glycidoxipropyl-trimethoxi-silan.

Die erfindungsgemäß zuzusetzenden Silane werden dem Klebstoffsystem in einer Menge von 0.1 bis 2 Gew.-%, bevorzugt 0.25 bis 1.5 Gew.-%, insbesondere 0.5 bis 1.0 Gew.-%, bezogen auf die feste Klebstoffkomponente, zugesetzt.

Der Zusatz kann bereits während der Herstellung des Harzes erfolgen. Das Silan kann aber auch einem bereits fertigen Kaschierkleber nach dem Stand der Technik zugesetzt werden.

Der erfindungsgemäß Silan enthaltende Kaschierkleber wird in einer Menge von 0.1 bis 10.0 g/qm, vorzugsweise 0.5 bis 5 g/qm und bei Zweikomponenten-Massen 0.5 bis 15 g/qm, bevorzugt 1.0 bis 10 g/qm auf eine oder beiden Seiten der zu kaschierenden Folien aufgetragen. Die Zahlenangaben beziehen sich jeweils auf Trockenmasse.

Als Kleber können gemäß der Erfindung die auf diesem technischen Gebiet bekannten Kaschierkleber eingesetzt werden. Es wird dazu auf den diesbezüglichen umfangreichen Stand der Technik verwiesen (vgl. u.a. die oben erwähnte DE-OS 25 49 227) Lediglich beispielsweise seien als hydroxifunktionelle Komponenten a) erwähnt Polyäther, vorzugsweise aliphatische geradkettige oder verzweigte Produkte, die vorzugsweise ein Molekulargewicht von etwa 300 bis 4000, besonders bevorzugt von etwa 400 bis 2000 aufweisen. Derartige Produkte werden von verschiedenen Firmen unter Handelsbezeichnungen verkauft (z.B. Desmophen-U Typen der Bayer AG, Leverkusen, Pluracol-Typen der Firma Wyandotte, Niax-Typen der Firma Union Carbide, USA, Polyglykole der Farbwerke Hoechst, Deutschland). Geeignete lineare oder verzweigte Polyester werden, z.B. hergestellt aus aliphatischen und/oder aromatischen Polycarbonsäuren und Polyolen, wobei das Molekulargewicht vorzugsweise die gleichen Bereiche aufweist, die bei den Polyäthern genannt wurden. Auch diese Produkte werden von zahlreichen Firmen im Handel angeboten (z.B. Desmophen-Typen der Bayer AG, Leverkusen). Es können auch solche Produkte eingesetzt werden, die im gleichen Molekül sowohl Polyester- als auch Polyätherbindungen aufweisen. Häufig handelt es sich bei den vorgenannten Produkten nicht um einheitliche Verbindungen, sondern um Stoffgemische. Dies ist dem Fachmann bekannt.

Beispiele für Polyole sind Polyäthylenglykol, Polypropylenglykole mit Molekulargewichten bis zu etwa 2500, vorzugsweise bis zu etwa 2000. Es können aber auch einfache Polyole wie Glykol, Neopentylglykol, Glycerin eingesetzt werden.

Im Gemisch mit den vorgenannten Verbindungen können in der Komponente a) gegebenenfalls noch Polyamine und/oder Aminoalkohole vorliegen. Es können als Komponente a) auch hydroxyfunktionelle Polyurethane, gegebenenfalls im Gemisch mit den anderen angegebenen Verbindungen, eingesetzt werden.

Geeignete als Komponente b) eingesetzte Polyisocyanate sind aliphatische und/oder aromatische und/oder cycloaliphatische Verbindungen mit vorzugsweise 2 oder 3 -NCO-Gruppen im Molekül. Diese Produkte sind im Handel erhältlich, z.B. unter der Warenbezeichnung Desmodur der Bayer AG, Leverkusen. Das Molekulargewicht der für die Herstellung der Umsetzungsprodukte verwendeten Polyisocyanate liegt vorzugsweise im Bereich von etwa 100 bis 1500, besonders bevorzugt 150 bis 500.

0022502

Die Einkomponenten-Kaschierkleber sind grundsätzlich Reaktionsprodukte aus den Komponenten a) und b), wobei jedoch die Komponenten in solchen Mengenverhältnissen eingesetzt werden, daß die Reaktionsprodukte noch freie Isocyanatgruppen enthalten. Es wird diesbezüglich insbesondere auf die bereits oben erwähnte DE-OS 25 49 227 verwiesen.

Lösungsmittelfreie Kaschierkleber werden in der Viskosität so ausgewählt, daß sie bei der Verarbeitungstemperatur die Ausbringung der gewünschten Auftragsmenge erlauben, worüber im Stand der Technik hinreichend Erfahrungen vorliegen.

Als klebetechnische Hilfs- und/oder Zusatzstoffe kann die Auftragsmischung gemäß der Erfindung z.B. Reaktionsbeschleuniger wie tertiäre Amine, metallorganische Verbindungen, wie Dibutylzinndilaurat, Gleitmittel, Farbstoffe, Pigmente oder Füllstoffe, thermoplastische Harze oder Weichmacher enthalten.

Die erfindungsgemäß zu verwendenden Silane sind im Handel erhältliche Produkte. Sie werden z.B. von der Firma Union Carbide zusammen mit einer Reihe anderer Silane als Haftvermittler angeboten. Derartige Silan-Haftvermittler werden auch bereits zum Einsatz in Polyurethan-Polymeren empfohlen (Defazet 28 (1974) S. 207 bis 211). Der Zusatz zu Kaschierklebern im Sinne der vorliegenden Erfindung wird darin jedoch nicht offenbart und auch nicht nahegelegt, da, wie oben ausgeführt, die Kaschierkleber des Stands der Technik, die üblicherweise keine Haftvermittler enthalten, bereits voll zufriedenstellende Haftungen zwischen den zu verbindenden Folien bewirken. Deswegen wurde insbesondere auch wegen des hohen Preises der Silane ein Zusatz zu Kaschierklebern vom Fachmann nicht in Betracht gezogen. Ein Hinweis dahingehend, daß die Verwendung von Silanen mit Kaschierklebern zu einer ganz beträchtlichen Verbesserung der Produkt- und Sterilisationsbeständigkeit führen könnte,

sind dem Stand der Technik nicht zu entnehmen. Es ist vor allen Dingen so, daß dann, wenn man versucht die im Handel erhältlichen Silane Kaschierklebern zuzusetzen, in den meisten Fällen eine Verbesserung der Produkt- und Sterilisationsbeständigkeit nicht eintritt, und daß darüber hinaus in vielen Fällen die Durchhärtung, insbesondere bei Einkomponenten-Klebern verzögert wird, was technisch nachteilig ist.

Es zeigte sich nun jedoch überraschend, daß die erfindungsgemäß zuzusetzenden Silane in der Lage sind, die Produkt- und Sterilisationsbeständigkeit im eingangs definierten Sinn erheblich zu verbessern. Andere Silane, z.B. vom Typ der Vinylsilane, Acrylsilane oder Chlorsilane führen bei Zusatz zu Kaschierklebern der eingangs genannten Typen nicht zu einer Verbesserung der Produktbeständigkeit. Es war daher für den Fachmann nicht vorauszusehen, daß bei Einsatz der oben definierten Silane die eingangs angegebene Aufgabenstellung gelöst werden konnte.

Der Umfang der Verbesserung der Produktbeständigkeit läßt sich unter anderem nach folgender Schnellmethode bestimmen: 20 mm breite Streifen der kaschierten Folie werden 4 Tage lang bei Normaltemperatur in 3%-ige Essigsäure bzw. Isopropanol gelegt und anschließend hinsichtlich ihrer Schälfestigkeit untersucht. Dazu werden die kaschierten Folien mit einer Abzugsgeschwindigkeit von 100 mm pro Min. unter einem Abzugswinkel von je 90° des abgezogenen Films gegenüber dem Laminat auseinandergezogen, und das dafür erforderliche Abzugsgewicht in Gramm festgestellt. Die dabei erzielten Ergebnisse für Beispiele gemäß der Erfindung und Vergleichsbeispiele sind in den Tabellen 1 bis 4 zusammengestellt. In den Tabellen sind auch die Werte für die Sterilisationsbeständigkeit angegeben.

0022502

Die Sterilisationsbeständigkeit von Laminaten, wie sie in der Verpackungsindustrie üblicherweise Verwendung finden, wird u.a. wie folgt geprüft:

Flachbeutel aus dem zu prüfenden Laminat werden mit Wasser oder einer Modellsubstanz gefüllt und in einem Gegendruckautoklaven in Wasser oder in Dampf 30 min lang bei 121°C liegend sterilisiert. Zur Verhinderung des Platzens der Beutel wird meistens mit einem Überdruck gearbeitet, der bereits vor dem Erhitzen beaufschlagt wird. Nach Beendigung der Sterilisation werden die Beutel durch Zuführung von kaltem Wasser in den Autoklaven abgekühlt. Sofort anschließend werden die Beutel dem Autoklaven entnommen, und nach einer optischen Beurteilung auf mögliche Delamination, die Verbundhaftung nach der o.a. Schälfestigkeitsmethode geprüft.

Alle übrigen, für die Praxisverwendung wesentlichen Eigenschaften des Kaschierklebers wie z.B. Pot-life, Geruchsneutralität oder ähnliches werden durch den Zusatz der Silane gemäß der Erfindung nicht beeinträchtigt.

Das Laminat gemäß der Erfindung besteht aus den eingangs erwähnten Folien. Die Polyesterfolie ist bevorzugt eine Folie aus Polyäthylenterephthalat. Diese Folie stellt dann, wenn das Laminat gemäß der Erfindung zu einem Beutel oder einem sonstigen Hohlkörper verarbeitet wird, die äußere Folie dar. Die Stärke der Polyesterfolie beträgt vorzugsweise mindestens etwa 10 µm, besonders bevorzugt mindestens 12 µm. Sie beträgt maximal vorzugsweise 25 µm, besonders bevorzugt etwa 23 µm. Derartige Polyesterfolien sind handelsübliche Produkte, z.B. unter den folgenden eingetragenen Warenzeichen erhältlich: Mylar (Du-Pont), Melinex (ICI), Hostaphan (Hoechst), Terphane (La Cellophane).

Die Aluminiumfolie, welche die Mittelschicht des Laminats gemäß der Erfindung bildet, besteht zweckmäßig aus Weichaluminium bzw. geglühtem Aluminium. Seine Stärke beträgt mindestens 5 µm und höchstens 150 µm. Es hängt vom jeweiligen Einsatzgebiet ab, welche Stärke verwendet wird. Wenn es sich um dünne Laminate handelt, wie sie für leicht biegsame Folien und Beutel eingesetzt werden, werden Aluminiumfolien im unteren Stärkenbereich eingesetzt, wobei die Folie vorzugsweise höchstens 2o µm und besonders bevorzugt höchstens 12 µm ist. Mindestens hat die Folie zweckmäßig eine Stärke von 9 µm. Wenn dagegen aus den Laminaten gemäß der Erfindung sogenannte halbsteife (semi rigid) Behälter hergestellt werden sollen, wird hierfür eine Aluminiumfolie bevorzugt, die mindestens 8o µm, vorzugsweise mindestens 100 µm stark ist. Die obere Grenze liegt bevorzugt bei 110 µm. Derartige Behälter werden in bekannter Weise nach dem Tiefziehverfahren hergestellt. Sie werden dann mit einer Deckelfolie versehen, die ebenfalls ein Laminat gemäß der Erfindung sein kann. In diesem Fall genügt eine Aluminiumfolie von 3o bis 5o µm Stärke. Es kann aber auch als Deckelfolie eine Aluminiumfolie mit der vorgenannten Stärke eingesetzt werden, die auf der Außenseite schutzlackiert oder bedruckt und dann schutzlackiert ist. Es kann auch ein Laminat aus einer Aluminiumfolie und einer Folie aus Polyäthylen, Polypropylen oder Äthylen-Propylencopolymer eingesetzt werden, vorzugsweise aus Polypropylen mit einer Stärke von etwa 2o bis 3o µm.

Die Folie aus Polyäthylen, Polypropylen und/oder einem Mischpolymerisat aus Äthylen und Propylen hat zweckmäßig eine Stärke von mindestens 3o µm, bevorzugt mindestens 4o µm und zweckmäßig höchstens 1oo µm, bevorzugt höchstens 7o µm. Das Polyäthylen kann in bekannter Weise modifiziert sein, z.B. mit Butylrubber. Derartige Folien sind im Markt erhältlich. Als Polypropylenfolien haben sich besonders sogenannte Cast-PP-Folien als geeignet erwiesen, die ebenfalls im Handel erhältlich sind. Die Dichte derartiger Folien liegt zweckmäßig im Bereich von etwa 0,928 bis 0,960.

Die Herstellung des Laminats gemäß der Erfindung kann dadurch erfolgen, daß alle drei Folien einer Kaschieranlage zugefügt werden, in der zu verklebende Seiten mit dem Kaschierkleber beschichtet werden. Einfacher läßt sich das Verfahren häufig dann durchführen, wenn zunächst zwei Folien in an sich bekannter Weise miteinander kaschiert werden und dieses Laminat aus zwei Folien dann mit der dritten Folie kaschiert wird. In der nachfolgend noch im einzelnen erläuterten Zeichnung ist lediglich die Kaschierung von zwei Folien dargestellt, wobei die eine dieser Folien ein Laminat aus bereits zwei kaschierten Folien sein kann.

Anhand der beigefügten Zeichnung wird die Erfindung weiter erläutert. In den Figuren sind gleiche Teile mit den gleichen Bezugszeichen versehen.

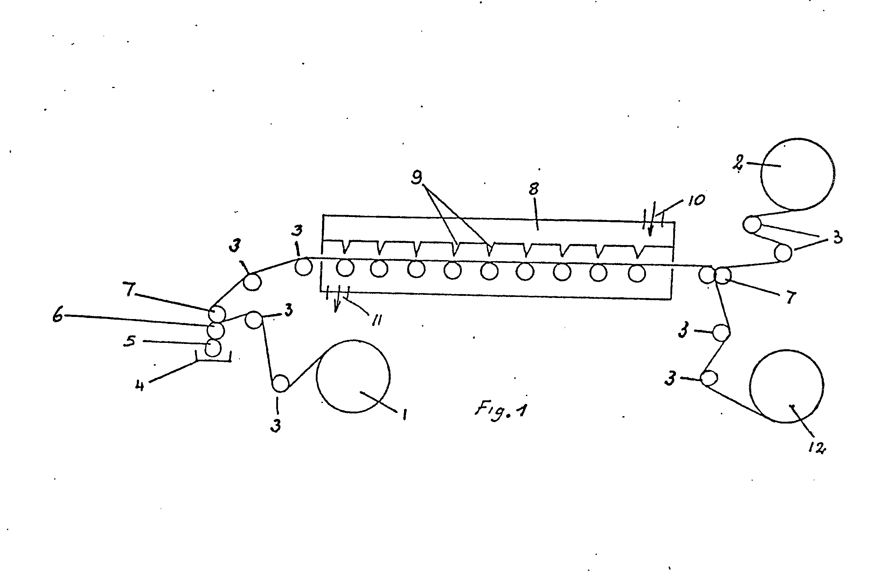

Figur 1 ist eine schematische Darstellung einer üblichen Kaschiermaschine für lösungsmittelhaltige Kleber, die jedoch auch für lösungsmittelfreie Kleber eingesetzt werden kann, wobei dann der Trockenkanal nicht mitbenutzt wird. Die Rolle, von der eine der zu verbindenden Folie abgewickelt wird, ist mit 1 bezeichnet. In der Wanne 4 befindet sich der Kaschierkleber, d.h. die Beschichtungsmasse gemäß der Erfindung. Diese Masse wird über die Tauchwalze 5 und die Auftragswalze 6 einseitig auf die von der Rolle 1 ablaufende Folienbahn aufgetragen, wobei die Preßwalze 7 die Folie gegen die Auftragswalze 6 drückt. Die in der Maschine vorhandenen Luftdüsen 9 im Trockenkanal 8 werden nur bei lösungsmittelhaltigen Klebern benutzt. Hierzu wird durch den Lufteinlaß 10 und den Luftauslaß 11 Luft durch den Trockenkanal geleitet Die zweite Folie, die mit der ersten Folie verbunden werden soll, wird von der Rolle 2 abgewickelt und über Umlenkwalzen 3 zu dem Preßwerk 7 geleitet, wo die beiden Folien mittels Walzen aneinandergedrückt werden. Der Folienverbund, die miteinander kaschierten Folien, werden auf die Rolle 12 aufgewickelt. Die Aushärtung des Klebers findet in der Rolle im Laufe weniger Tage statt.

Gegenstand der Erfindung ist auch die Verwendung von Silanen, die als organofunktionelle Gruppe mindestens eine Epoxygruppe enthalten, als Bestandteil von Kaschierklebern zur Erhöhung der Sterilisationsbeständigkeit und Produktbeständigkeit von damit verklebten Folienlaminaten aus einer Polyesterfolie, einer Aluminiumfolie als Mittelschicht, und einer Folie aus Polyäthylen, Polypropylen und/oder einem Mischpolymerisat aus Äthylen und Propylen.

In den folgenden Beispielen bedeuten die Angaben Gewichtsteile und Gewichtsprozent.

Beispiel 1

2000 g Polypropylenglykol mit einem Molekulargewicht von 2000, 425g 4.4-Diphenylmethandiisocyanat und 76.3 g eines Umsetzungsproduktes von 3 Mol Hexamethylendiisocyanat mit 1 Mol Wasser (im Handel unter der Bezeichnung Desmodur N, Hersteller Bayer AG) erhältlich, werden in einen Reaktionskessel gegeben und 1 Stunde auf 90°C erhitzt. Nach Zugabe von 25 g ß (3.4-Epoxi-cyclo-hexyl)äthyl-trimethoxi-silan wird weiterhin bei 90°C solange gerührt, bis eine Viskosität von 1700 mPa.s gemessen bei 100°C erreicht ist. Der NCO-Gehalt des Harzes beträgt 4.95%.

Das Harz wird ohne weitere Zusätze oder Verdünnung als Kaschierkleber eingesetzt, wobei der Auftrag auf die zu verklebenden Filme bei 100°C erfolgt. Das Auftragsgewicht beträgt ca. 1.5 g/qm.

Vergleichsbeispiel 1a

Es wurde wie in Beispiel 1 beschrieben gearbeitet, jedoch ohne Zusatz von Silan.

Vergleichsbeispiel 1b

Es wurde wie in Beispiel 1 beschrieben gearbeitet, jedoch an Stelle von 25 g ß (3.4-Epoxi-cyclo-hexyl)äthyl-trimethoxi-silan wurden 29.5 g Methacryl-oxipropyl-trimethoxi-silan zugesetzt.

Beispiel 2

Ein Polyester, der aus 20.85 Teilen Äthylenglykol, 1.80 Teilen 2.2 Dimethyl-1.3 propandiol, 25.30 Teilen Phthalsäureanhydrid und 24.96 Teilen Adipinsäure in einem Reaktionskessel bei etwa 240°C unter Vakuum hergestellt wurde, wird nach Abkühlen auf etwa 60°C mit Äthylacetat auf 70 $\pm$ 1% Festkörper verdünnt. Anschließend wird dieser Lösung 0.5% ß (3.4 Epoxi-cyclo-hexyl)äthyl-trimethoxi-silan zugesetzt.

Die OH-Zahl dieses Harzes liegt zwischen 20 und 35, die Säurezahl unter 5. Die Viskosität der 70%-igen Lösung sollte 1800 $\pm$ 200 mPa.s bei 25°C betragen.

Diese Harzlösung ergibt in Abmischung mit 7% einer 75%-igen Isocyanatlösung (im Handel unter der Bezeichnung Desmodur L, Hersteller Bayer AG) einen Kaschierkleber, der zur Verarbeitung auf etwa 35% Festkörper verdünnt wird. Das Auftragsgewicht des Klebstoffes auf je eine der zu verklebenden Filmseiten beträgt 4-5 g/qm.

Vergleichsbeispiel 2a

Es wurde wie in Beispie2 2 beschrieben gearbeitet, jedoch ohne Zusatz von Silan.

Vergleichsbeispiel 2b

Es wurde wie in Beispiel 2 beschrieben gearbeitet, jedoch mit Zusatz von der gleichen Menge Chlorpropyl-trimethoxi-silan an Stelle von ß (3.4-Epoxi-cyclo-hexyl)äthyl-trimethoxi-silan.

Beispiel 3

Zu dem Reaktionsprodukt aus 3 Mol Toluylendiisocyanat und 1 Mol Trimethylolpropan, das als 75%-ige Lösung in Äthylacetat unter der Bezeichnung Desmodur L (Hersteller Bayer AG) oder Trixene (Hersteller Baxenden Chem.) im Handel erhältlich ist, wird 4.5% ß (3.4-Epoxi-cyclo-hexyl)äthyl-trimethoxi-silan zugegeben und nach gründlicher Durchmischung 7 Stunden bei 80°C gelagert.

Diese Härterlösung wird als Zusatz für eine 70%-ige Harzlösung eingesetzt, wobei auf 100 Teile Harzlösung gemäß Vergleichsbeispiel 2a 7 Teile dieser Härterlösung zugesetzt werden. Diese Mischung wird mit Äthylacetat auf 35% Festkörper verdünnt und zur Verklebung von Filmen in einer Schichtstärke von 4-5 g Feststoff/qm auf je eine der zu verklebenden Filmseiten aufgebracht.

## Vergleichsbeispiel 3a

Es wurde wie in Beispiel 3 beschrieben gearbeitet, jedoch ohne Zusatz von Silan.

## Vergleichsbeispiel 3b

Es wurde wie in Beispiel 3 beschrieben gearbeitet, jedoch mit Vinyl-triäthoxi-silan an Stelle des ß (3.4-Epoxi-cyclo-hexyl)äthyl-trimethoxi-silan.

## Beispiel 4

39.18 Teile Polypropylenglykol mit einem Molekulargewicht von 1000, 3.57 Teile Polypropylenglykol mit einem Molekulargewicht von 5000 und 1.09 Teile 2.2-Dimethylmethan-1.3-Propandiol werden mit 26.16 Teilen 4.4-Diphenylmethandiisocyanat gemischt und 5 Stunden bei 80°C unter Feuchtigkeitsausschluß gerührt, bis die Viskosität einer 80%-igen Lösung in Äthylacetat ca. 2000 mPa.s beträgt. Anschließend wird dem auf Raumtemperatur abgekühlten Reaktionsprodukt 13.8 Teile γ-Glycidoxipropyl-trimethoxi-silan zugegeben, und mit Äthylacetat auf einen Festkörpergehalt von 70% verdünnt. Der Gehalt an Isocyanat soll dann zwischen 1.3 und 1.9% liegen. Die resultierende Lösung mit $70^{\pm} 1\%$ Festkörper hat eine Viskosität von 2000 bis 2700 mPa.s.

Diese Lösung wird zur Verarbeitung auf ca. 35% Festkörper verdünnt und mit üblichen Auftragswerken in einer Schichtstärke von 4 bis 5 g Feststoff/qm aufgetragen.

## Vergleichsbeispiel 4a

Es wurde wie in Beispiel 4 beschrieben gearbeitet, jedoch ohne Zusatz von Silan.

0022502

Vergleichsbeispiel 4b

Es wurde wie in Beispiel 4 beschrieben gearbeit, jedoch mit Zusatz des $\gamma$-Aminopropyl-triäthoxi-silans an Stelle des $\gamma$-Glycidoxipropyl-trimethoxi-silan, gleich nach Zusatz gelierte die Masse. Ein Versuch, das $\gamma$-Aminopropyl-triäthoxi-silan in Form einer stark verdünnten, 5%-igen Lösung einzuarbeiten, scheiterte ebenfalls.

Die an gemäß Beispielen 1 bis 4 hergestellten Laminaten erhaltenen Prüfungsergebnisse sind in den Tabellen 1 bis 4 zusammengefaßt.

Die darin verwendeten Abkürzungen bedeuten:

| | |
|---|---|
| Polyester | = Polyesterfilm (Hostaphan RN 15 µ) |
| Alu | = Alufolie weichgeglüht 15 µ |
| PE | = Polyäthylen low density 50 µ, einseitig druckvorbehandelt |
| PP | = Polypropylen ungereckt 50 µ, einseitig druckvorbehandelt |
| DEL | = großflächige Delamination |
| 150 Del | = Haftung 150 g/20 mm mit teilweiser Delamination |
| > 500 | = Haftung 500 g mit Folienabriß |

Beurteilung erfolgt nach dem Aussehen 1 = unverändert, sehr gut 6 = deutlich sichtbare Delamination

Bei den in den Tabellen beschriebenen Laminaten handelt es sich um Laminate aus den jeweils angegebenen drei Folien, wobei jedoch die Haftung jeweils zwischen der jeweils angegebenen äußeren Folie und der Aluminiumfolie als Mittelfolie gemessen wurde, wobei diese Alumiumfolie auf der anderen Seite die jeweils angegebene Folie aufwies. Es wurden also jeweils Laminate aus Polyester, Aluminium und Polyäthylen sowie aus Polyester, Aluminium und Polypropylen hergestellt, und die jeweiligen Werte für die Haftung sind in den Tabellen 1 bis 4 angegeben.

Tabelle 1

| Beispiel | Laminat | Haftung nach Aushärtung | Haftung nach Sterilisation | Beurteilung nach Sterilisation | Haftung nach Lagerung in Isopropanol | Haftung nach Lagerung in 3%-iger Essigsäure |
|---|---|---|---|---|---|---|
| 1 | Polyester-Alu | > 420 | nicht trennbar | 2 | - | - |
|  | Alu-PE | 460 | - | - | 70 | 90 |
|  | Alu-PP | > 1000 | 1130 | 2 | 230 | 670 |
| 1a | Polyester-Alu | 250 | 150 | 6 | - | - |
|  | Alu-PE | 300-800 | - | - | Del | Del |
|  | Alu-PP | 1230 | 120 | 6 | 110 | Del |
| 1b | Polyester-Alu | 350 | 50 | 6 | - | - |
|  | Alu-PE | 300 | - | - | 40 | Del |
|  | Alu-PP | 1100 | 210 | 6 | 140 | 120 |

- 19 -

Tabelle 2

| Beispiel | Laminat | Haftung nach Aushärtung | Haftung nach Sterilisation | Beurteilung nach Sterilisation | Haftung nach Lagerung in Isopropanol | Haftung nach Lagerung in 3%-iger Essigsäure |
|----------|---------|------------------------|---------------------------|-------------------------------|--------------------------------------|---------------------------------------------|
| 2  | Polyester-Alu | 420 | > 550 | 1 | –   | –– |
|    | Alu-PE        | 670 | –     | – | 50  | 230 |
|    | Alu-PP        | 570 | 300   | 1 | 140 | 300 |
| 2a | Polyester-Alu | 280 | 320   | 5 | –       | –   |
|    | Alu-PE        | 270 | –     | – | Del     | Del |
|    | Alu-PP        | 520 | 80    | 5 | 120 Del | 110 |
| 2b | Polyester-Alu | 290 | 400   | 4 | –   | –   |
|    | Alu-PE        | 400 | –     | – | 20  | Del |
|    | Alu-PP        | 490 | 190   | 4 | 120 | 150 Del |

Tabelle 3

| Beispiel | Laminat | Haftung nach Aushärtung | Haftung nach Sterilisation | Beurteilung nach Sterilisation | Haftung nach Lagerung in Isopropanol | Haftung nach Lagerung in 3%-iger Essigsäure |
|---|---|---|---|---|---|---|
| 3 | Polyester-Alu | 430 | +610 | 2 | – | – |
| | Alu-PE | 680 | – | – | 40 | 270 |
| | Alu-PP | 480 | 330 | 2 | 140 | 280 |
| 3a | Polyester-Alu | 280 | 320 | 5 | – | – |
| | Alu-PE | 270 | – | – | Del | Del |
| | Alu-PP | 520 | 80 | 5 | 120 Del | 110 |
| 3b | Polyester-Alu | 80 | 120 | 4 | – | – |
| | Alu-PE | 270 | – | – | 20 | Del |
| | Alu-PP | 950 | 190 | 4 | 280 | 60 |

| Beispiel | Laminat | Haftung nach Aushärtung | Haftung nach Sterilisation | Beurteilung nach Sterili- sation | Haftung nach Lagerung in Isopropanol | Haftung nach Lagerung in 3%-iger Essigsäure |
|----------|---------|-------------------------|----------------------------|----------------------------------|--------------------------------------|---------------------------------------------|
| 4 | Polyester-Alu | >450 | >550 | 1-2 | - | - |
| | Alu-PE | 500 | - | - | 30 | Del |
| | Alu-PP | 300 | 800 | 1-2 | 180 | 450 |
| 4a | Polyester-Alu | 480 | 220 | 6 | - | -- |
| | Alu-PE | 480 | - | - | Del | Del |
| | Alu-PE | 520 | 100 | 6 | Del | Del |

T a b e l l e    4

- 22 -

Patentansprüche:

1. Laminat aus Polyesterfolie, einer Aluminiumfolie als Mittelschicht und einer Folie aus Polyäthylen, Polypropylen und/oder einem Mischpolymerisat aus Äthylen und Propylen, wobei die Folien mit Polyurethan-Kaschierklebern verklebt sind, d a d u r c h g e k e n n z e i c h n e t , daß die Kaschierkleber ein Silan mit mindestens einer Epoxigruppe enthalten.

2. Laminat nach Anspruch 1, dadurch gekennzeichnet, daß das Silan
ß (3.4-Epoxi-cyclo-hexyl)äthyl-trimethoxi-silan oder ɣ-Glycidoxipropyl-trimethoxi-silan ist.

3. Laminat nach einem der Ansprüche 1 oder 2, dadurch gekennzeichnet, daß das Silan in einer Menge von o.1 bis 2 Gew.-%, bevorzugt o.25 bis 1.5 Gew.-%, insbesondere o.5 bis 1.o Gew.-%, bezogen auf die feste Klebstoffkomponente vorliegt.

4. Laminat nach einem der Ansprüche 1 bis 3, dadurch gekennzeichnet, daß der Beschichtungsauftrag bei Einkomponenten-Massen o.1 bis 1o.o g/qm, vorzugsweise o.5 bis 5 g/qm und bei Zweikomponenten-Massen o.5 bis 15 g/qm, bevorzugt 1.o bis 1o g/qm beträgt.

5. Laminat nach einem der Ansprüche 1 bis 4, dadurch gekennzeichnet, daß der Kaschierkleber ein Einkomponentenkleber ist.

6. Laminat nach einem der Ansprüche 1 bis 5, dadurch gekennzeichnet, daß die Polyesterfolie eine Folie aus Polyäthylenterephthalat ist.

7. Laminat nach einem der Ansprüche 1 bis 6, dadurch gekennzeichnet, daß die Polyesterfolie eine Stärke von 1o bis 25 µm, vorzugsweise von 12 bis 23 µm hat.

8. Laminat nach einem der Ansprüche 1 bis 7, dadurch gekennzeichnet, daß die Aluminiumfolie eine Stärke von 5 bis 15o µm, vorzugsweise von 5 bis 2o µm hat.

9. Laminat nach einem der Ansprüche 1 bis 8, dadurch gekennzeichnet, daß die Folie aus Polyäthylen, Polypropylen und/oder einem Mischpolymerisat aus Äthylen und Propylen eine Stärke von 3o bis 1oo µm, vorzugsweise von 4o µm bis 7o µm hat.

1o. Verfahren zur Herstellung von einem Laminat aus einer Polyesterfolie, einer Aluminiumfolie als Mittelschicht und einer Folie aus Polyäthylen, Polypropylen und/oder einem Mischpolymerisat aus Äthylen und Propylen, durch Verbinden von Folien durch maschinelles Beschichten mit einer Geschwindigkeit von vorzugsweise mehr als 5o m/min von einer oder von beiden der zu verbindenden Folienseiten mit lösungsmittelhaltigen oder lösungsmittelfreien Ein- oder Zweikomponenten-Kaschierklebern aus einem Gemisch von

a) hydroxifunktionellen Polyestern, Polyäthern oder Mischpolyäther-estern, Polyolen und gegebenenfalls Polyaminen und/oder Aminoalkoholen, und/oder hydroxifunktionellen Polyurethanen, und

b) Polyisocyanaten,

oder aus freie Isocyanatgruppen tragenden Reaktionsprodukten aus den Komponenten a) und b), d a - d u r c h   g e k e n n z e i c h n e t, daß die Kaschierkleber ein Silan mit mindestens einer Epoxigruppe enthalten.

11. Verfahren nach Anspruch 1o, dadurch gekennzeichnet, daß das Silan

ß (3.4-Epoxi-cyclo-hexyl)äthyl-trimethoxi-silan oder
γ-Glycidoxipropyl-trimethoxi-silan ist.

12. Verfahren nach einem der Ansprüche 1o und 11, dadurch gekennzeichnet, daß das Silan in einer Menge von o.1 bis 2 Gew.-%, bevorzugt 0.25 bis 1.5 Gew.-%, insbesondere 0.5 bis 1.0 Gew.-%, bezogen auf die feste Klebstoffkomponente vorliegt.

13. Verfahren nach einem der Ansprüche 1o bis 12, dadurch gekennzeichnet, daß der Beschichtungsauftrag, als Trockenmasse, bei Einkomponenten-Massen o.1 bis 1o.o g/qm, vorzugsweise o.5 bis 5 g/qm und bei Zweikomponenten-Massen o.5 bis 15 g/qm, bevorzugt 1.o bis 1o g/qm beträgt.

14. Verfahren nach einem der Ansprüche 1o bis 13, dadurch gekennzeichnet, daß der Kaschierkleber ein Einkomponentenkaschierkleber ist, der vorzugsweise lösungsmittelfrei ist.

15. Verfahren nach einem der Ansprüche 1o bis 14, dadurch gekennzeichnet, daß die Polyesterfolie eine Folie aus Polyäthylenterephthalat ist.

16. Verfahren nach einem der Ansprüche 1o bis 15, dadurch gekennzeichnet, daß die Polyesterfolie eine Stärke von 1o bis 25 µm, vorzugsweise von 12 bis 23 µm hat.

17. Verfahren nach einem der Ansprüche 1o bis 16, dadurch gekennzeichnet, daß die Aluminiumfolie eine Stärke von 5 bis 15o µm, vorzugsweise von 5 bis 2o µm hat.

18. Verfahren nach einem der Ansprüche 1o bis 17, dadurch gekennzeichnet, daß die Folie aus Polyäthylen, Polypropylen und/oder einem Mischpolymerisat aus Äthylen und Propylen eine Stärke von 3o bis 1oo µm, vorzugsweise von 4o bis 7o µm hat.

19. Verwendung von Silanen, die als organofunktionelle Gruppe mindestens eine Epoxigruppe enthalten, als Bestandteil von Kaschierklebern zur Erhöhung der Sterilisationsbeständigkeit und Produktbeständigkeit von damit verklebten Folien-Laminaten aus einer Polyesterfolie, einer Aluminiumfolie als Mittelschicht und einer Folie aus Polyäthylen, Polypropylen und/oder einem Mischpolymerisat aus Äthylen und Propylen.

0022502

1/1

Fig.1

Europäisches
Patentamt

**EUROPÄISCHER RECHERCHENBERICHT**

0022502
Nummer der Anmeldung

EP 80 10 3676

| Kategorie | Kennzeichnung des Dokuments mit Angabe, soweit erforderlich, der maßgeblichen Teile | betrifft Anspruch |
|---|---|---|
| | <u>GB - A - 1 453 621</u> (TOYO SEIKAN KAISHA LTD.) | 1,6-9, 15-18 |
| |   * Seite 3, Zeilen 20-48; Seite 4, Zeilen 13-24; Seite 5, Zeilen 27-40; Seite 8, Zeilen 7-20; Ansprüche 1,3,6,9,10,11; Figuren 1-4 * | |
| | -- | |
| | <u>DE - A - 1 694 750</u> (DU PONT DE NE-MOURS) | 2,3, 11,12 |
| |   * Seite 3, Zeilen 5-21; Seite 10, Zeilen 4-21; Seite 11, Zeilen 1-13 * | |
| | -- | |
| | <u>DE - A - 2 162 984</u> (AMERICAN CYA-NAMID CO.) | 2,3, 11,12 |
| |   * Seite 3, Zeilen 14-24; Seite 7, Zeilen 11-32; Seite 8, Zeilen 1-15; Seiten 14-20; Seite 21, Zeilen 20-31; Seite 22, Zeilen 1-13 * | |
| | -- | |
| | <u>US - A - 3 649 430</u> (A.F. LEWIS et al.) | 2,3, 11,12 |
| |   * Spalte 2, Zeilen 52-72; Spalte 3, Zeilen 1-17; Spalte 4, Zeilen 64-75; Spalte 5, Zeilen 1-53 * | |
| | -- | |
| D,A | <u>DE - A - 2 549 227</u> (DR.K. HERBERTS & CO. GmbH) | |
| | ---- | |

**EINSCHLÄGIGE DOKUMENTE**

KLASSIFIKATION DER ANMELDUNG (Int.Cl.³)

B 32 B 15/08
       15/20

RECHERCHIERTE SACHGEBIETE (Int. Cl.³)

B 32 B

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort. | Abschlußdatum der Recherche | Prüfer |
|---|---|---|
| Den Haag | 16-10-1980 | VAN THIELEN |

EPA form 1503.1   06.78